# EUROPEAN PATENT SPECIFICATION

(11) **EP 0 842 499 B1**
(45) Date of publication and mention of the grant of the patent: **13.10.1999**
(21) Application number: 96925902.7
(22) Date of filing: 01.08.1996
(51) Int. Cl.: G07C 5/12, G01P 1/12

(54) **TACHOGRAPH WITH STYLUS FOR MAKING IDENTIFICATION MARKS ON A CHART**
TACHOGRAPH MIT STIFT ZUM ANBRINGEN VON KENNZEICHEN AUF EINE DIAGRAMMSCHEIBE
TACHYGRAPHE DOTE D'UN ENREGISTREUR A POINTE DESTINE A TRACER DES SIGNES IDENTIFICATEURS SUR UN DISQUE

(30) Priority: 04.08.1995 GB 9516083
(43) Date of publication of application: 20.05.1998
(73) Proprietor: TVI EUROPE LIMITED, Dundee DD2 3QJ (GB)
(72) Inventor: BERTRAM, William, Halsey, Ricardo Bell Gable, Ely Cambridgeshire CB6 3RQ (GB)
(74) Representative: Carpmael, John William Maurice
(86) International application number: GB9601859
(87) International publication number: WO9706515

(56) References cited:
- EP-A- 0 624 856
- EP-A- 0 676 728
- DE-A- 3 043 375
- DE-A- 4 321 642
- DE-U- 8 804 412

## Description

This invention relates to a tachograph and, more particularly, to a tachograph having recording pens for recording vehicle data on a chart, at least one of these pens also being adapted to record identification marks on the chart (e.g. for identifying a driver of a vehicle in which the tachograph is installed).

One of the problems involved in manufacturing tachographs is to design a tachograph which avoids fraudulent misuse of either the tachograph, or the recording charts. One such fraud is for drivers to extend their driving hours by destroying some of their charts. For example, a driver may use a first chart from 7.00 a.m. to midday and then use a second chart from midday to 10.00 p.m. The driver may then destroy the first chart and claim that the second represented his total working day. One way of overcoming this is to use sequentially numbered charts. However, this involves pre-printing numbers onto charts, which increases costs. Moreover, the administration which would be involved, in controlling the use and in checking the charts, could be difficult.

The invention seeks to overcome these problems in a more efficient and cost-effective manner.

DE-A-4321642 describes an arrangement in which driver information on a chip card is inserted into a reading device which provides signals for controlling movement of recording pens in a tachograph. The pens, which normally record speed, distance and time information for the vehicle journey, are used to record step traces which represent a code from which driver information can be decoded.

EP-A-0676728 describes a tachograph in which the radial movement of a recording pen is used to record dots on the chart that represent identification data. The pen is moved up and down, to make dots, in each radial row, the turntable being advanced in the normal clockwise direction for recording each radial row of dots.

Features of the invention are defined in the accompanying claims.

According to the invention, the turntable is rotated either clockwise, or anti-clockwise by the required radial amount, for producing horizontal markings or lines on the chart. Also, the recording pen is moved radially so as to produce vertical markings or lines, the horizontal and vertical lines being parts of, for example, alpha numeric characters (e.g. letters and/or numerals in a 7-bar code). However, markings may alternatively represent, for example, a bar code. This has the advantage that relatively few changes would be necessary, in currently used mechanisms, in order to make the markings on the chart. Moreover, turntables driven by stepper-motors can be made to rotate either clockwise, or anti-clockwise, in steps, to make the horizontal lines.

If necessary, the recording pen is moved out of contact with the chart and then returned to a writing position in order to move between markings, e.g. to write separate letters or numbers or bar code lines.

Preferably, the tachograph is used in combination with a card reader, the reader including means to identify a driver associated with an inserted card, means being provided to make markings on the chart which identify the driver with regard to the information read from the card.

It is also preferable to include means which respond to conditions where, for example, no chart is present on the turntable, or no card has been inserted in a reader, and which then provide an indication, to the driver, that such conditions exist. This arrangement may be supplemented by means for immobilising the vehicle until a chart is installed and/or an acceptable card has been inserted. Alternatively, means can be provided for causing an indication, external to the vehicle, to be given, so as to show that the vehicle is being driven without proper authorisation.

Embodiments of the invention will now be described with reference to the accompanying drawings in which:
Fig. 1 illustrates a drawer-type of tachograph;
Fig. 2 schematically illustrates one embodiment of the invention;
Fig. 3 is a block diagram for explaining a preferred feature; and
Fig. 4 schematically illustrates another embodiment of the invention.

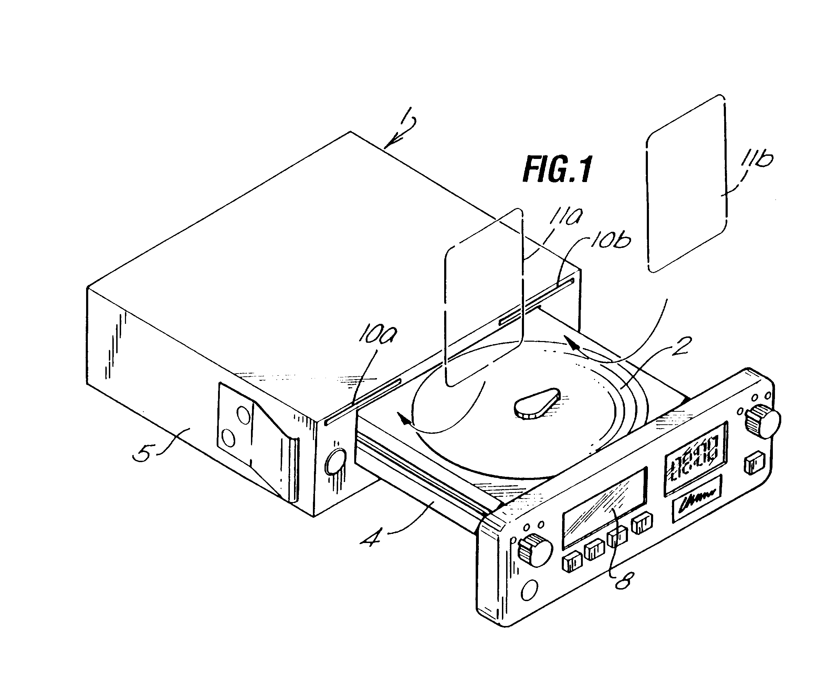

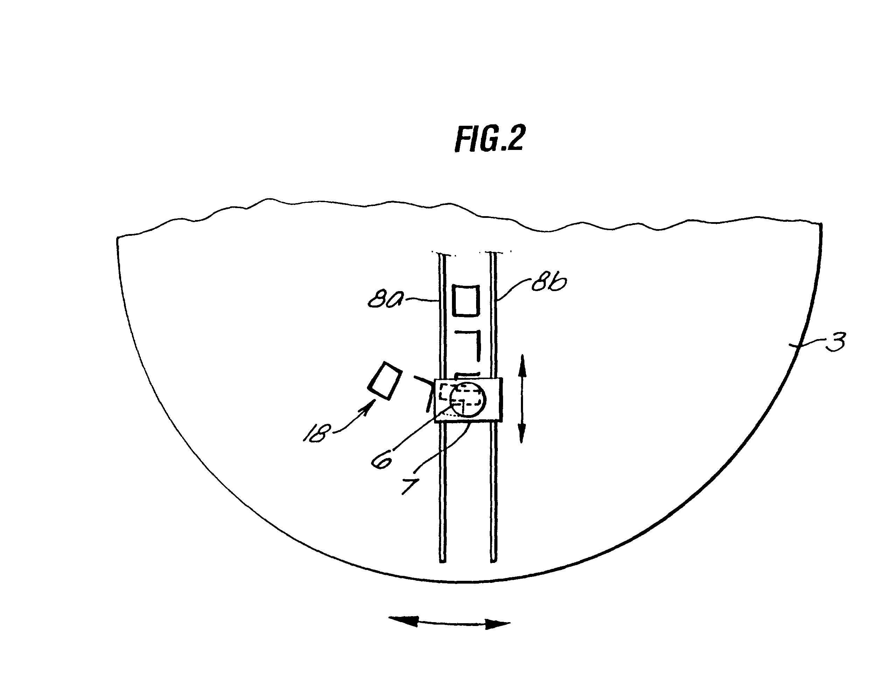

Referring to Figs. 1 and 2, a tachograph 1 includes a turntable 2 on which a chart 3 is mounted. Fig. 1 shows a drawer-type of tachograph in which the drawer 4 is shown in an open position and is normally returned, inside housing 5, to enable recording pens to make traces on the chart 3. The construction and operation of such means is known to those skilled in the art and therefore require no further detailed description.

In the plan view of Fig. 2, a recording pen 6 is supported in a carriage 7, which reciprocates on parallel rails 8a and 8b. The turntable 3 is normally rotated, in one circular direction, by a stepper-motor (not shown). Known means synchronously drive the turntable 3 so that time markings on the chart 3 correspond with time indicated on a display 8.

The writing point of pen 6 is normally in contact with an annular region of the chart 3 in which it makes its recording trace. The trace may represent various operating states of the vehicle, such as vehicle speed, distance covered, driver duty, etc. The movement of the pen 7 is limited in the appropriate circular band, as the turntable 2 is driven, whereby a recording trace of, e.g. speed, can be read from the chart when the chart is later inspected.

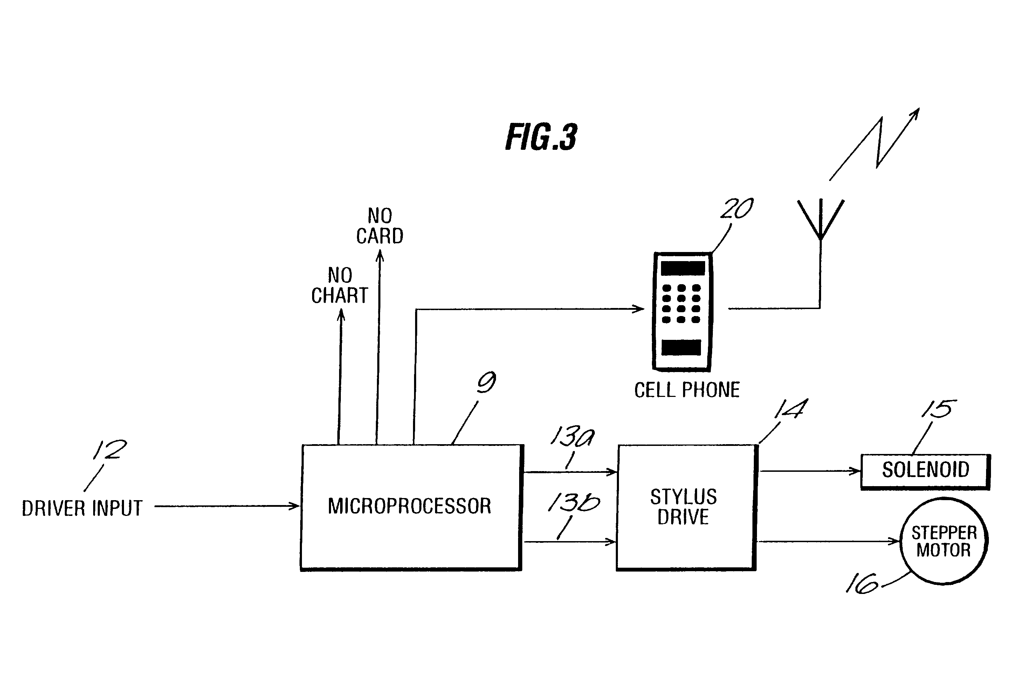

The tachograph 1 preferably includes an on-board microprocessor 9, as shown in Fig. 3, which receives various input signals that are processed in order to drive respective recording pens to make the necessary traces for showing the relevant vehicle information. In addition, the tachograph 1 has slots 10a, 10b which enable respective cards 11a, 11b to be inserted. Either of these cards (which may be of different types) contain information relating to the identity of a driver of the vehicle, and any other information which may be relevant, (e.g.) driver duty, destination, etc. In particular, one of the cards (lla,llb) may be a "smart card" which is capable of recording, as well as providing, vehicle and/or driver information.

A card reader (not shown), of known construction, within the tachograph 1, reads the inserted card (11a, 11b) and provides a driver input signal 12 to microprocessor 9. The microprocessor is programmed to respective output signals 13a,13b to stylus drive 14 which operates, for example, a solenoid 15 and a stepper-motor 16. The stepper-motor 16 is coupled to the turntable 2, whereby the turntable can be rotated, in one or more steps, either clockwise, or anti-clockwise. With the writing point of the pen in contact with chart 3, this will enable comparatively horizontal strokes, 17 of (e.g.) alpha-numeric characters 18 to be made on the chart 3. Similarly, the solenoid can be made to cause (e.g.) short, or long strokes of movement of carriage 7 on rails 8a, 8b, so as to make the vertical strokes 19 of the characters 18 on the chart 3.

In short, movement of the pen 6 and of the turntable 2 is controlled by the microprocessor 9 in order to write the required characters or numerals on the chart 3. These may identify the driver in accordance with information derived from the card reader mentioned above. This movement control would include moving the pen away from the chart and returning it to a writing position, so as to move between markings. This simulates lifting a pen from paper, when writing separate letters or numbers. The mechanical means for moving the pen in this way are of known construction and require no detailed description.

With further reference to Fig. 3, microprocessor 9 will also provide signal outputs representing "no chart" present, or "no card" inserted and will provide an indication, e.g. on the front of the tachograph adjacent the time indicator 8, that these conditions exist. If the driver ignores these indications, the vehicle may be immobilised, by suitable output signals from microprocessor 9, until a chart has been inserted and a valid card read. The microprocessor 9 can also provide an output signal to a cell phone 20 which transmits a radio signal to indicate unauthorised use of the vehicle. Instead of using a cell phone, the vehicle may have an external indicator to provide a similar warning of unauthorised use of the vehicle.

As the detailed manner of programming microprocessor 9 to achieve the required pen movement will be known to those skilled in the art, no further description will be given.

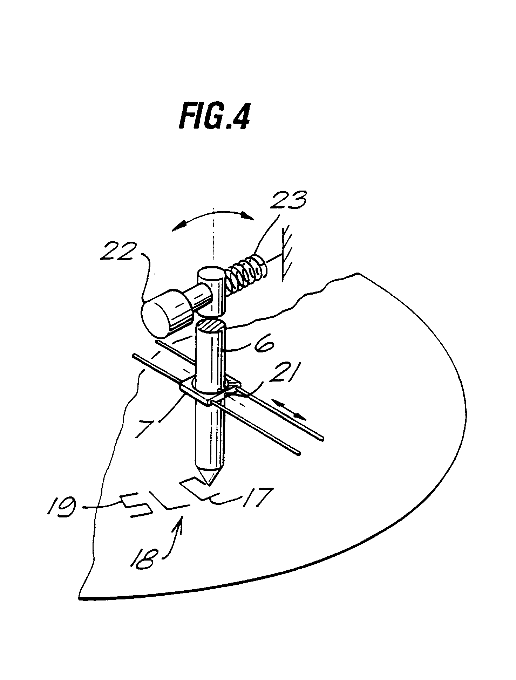

In the embodiment shown in Fig. 4, the turntable 3 does not take part in causing the pen 6 to make the identification markings 18 on the chart 3. Whilst the pen 6 reciprocates on rails 8a, 8b as before, it is also mounted on a pivot 21 which enables a solenoid 22 to tilt the upper end of the pen 6 against spring bias 23, thereby providing the transverse or horizontal strokes 17. Otherwise, the pen 6 is driven by conventional means in order to make a vehicle recording trace.

In both of the above described embodiments, the same recording pen is used, on different occasions, to make traces relating to vehicle information and identification marks. It may also be advantageous, in certain cases, to cause the pen to be shifted into a band separate from the vehicle trace recording band. This would involve further programming the microprocessor 9 to shift the pen 6 along the rails 8a,8b.

The markings 18 can be made either radially (Fig. 2), or circumferentially (Fig. 4), as required.

It would not be necessary to remove the pen from contact with the chart (i.e. to move between adjacent markings) if the ink flow is stopped and started, as necessary, to the writing point.

## Claims

1. A tachograph (1) comprising a turntable (2) for supporting a chart (3); a recording pen (6) for making a recording trace on the chart; drive means responsive to a first signal so as to cause the turntable and the recording pen to be moved to make said recording trace which represents an operating state of a vehicle; the drive means being also responsive to a second signal which causes movement of the turntable and the recording pen so that the trace on the chart represents an identification mark,
characterised in that
the turntable can be rotated either clockwise, or anti-clockwise by the required radial amount, for producing horizontal markings or lines (17) on the chart; and in which the recording pen can be moved radially so as to produce vertical markings or lines (19), the horizontal and vertical lines being parts of a code (18).

2. A tachograph according to Claim 1, in which markings represent a bar code.

3. A tachograph according to Claim 1, in which the recording pen is mounted so that it is movable radially and also so that at least its writing point is movable in a transverse direction to the radial direction.

4. A tachograph according to any of the preceding Claims in combination with a card reader, the reader including means to identify a driver associated with an inserted card, means being provided to make markings on the chart which identify the driver with regard to the information read from the card.

5. A tachograph according to Claim 4, further including means which respond to conditions where no chart is present on the turntable, or no card has been inserted in a reader, and which then provide an indication, to the driver, that such conditions exist.

6. A tachograph according to Claim 5 further including means for immobilising the vehicle until a chart is installed and/or an acceptable card has been inserted.

7. A tachograph according to Claim 5, further including means for causing an indication, external to the vehicle, to be given, so as to show that the vehicle is being driven without proper authorisation.

## Patentansprüche

1. Tachograph (1), der einen Drehteller (2) zur Aufnahme einer Diagrammscheibe (3), einen Registrierstift (5) zum Aufzeichnen einer Spur auf der Diagrammscheibe und einen Antrieb umfaßt, der auf ein erstes Signal anspricht, um den Drehteller und den Registrierstift zu bewegen und damit diese Spur aufzuzeichnen, die einen Betriebszustand des Fahrzeuges darstellt, wobei der Antrieb auch auf ein zweites Signal anspricht, das eine Bewegung des Drehtellers und des Registrierstifts in der Weise bewirkt, daß die Spur auf der Diagrammscheibe eine Kennzeichnungsmarkierung darstellt, dadurch gekennzeichnet, daß der Drehteller entweder im Uhrzeigersinn oder im Gegenuhrzeigersinn um eine erforderliche radiale Wegstrecke verdreht werden kann, um auf der Diagrammscheibe horizontale Markierungen oder Linien (17) zu erzeugen, und dass der Registrierstift radial bewegt werden kann, um vertikale Markierungen oder Linien (19) zu erzeugen, und wobei die horizontalen und vertikalen Linien Teil eines Codes (18) sind.

2. Tachograph gemäß Anspruch 1, wobei die Markierungen einen Strichcode darstellen.

3. Tachograph gemäß Anspruch 1, wobei der Registrierstift so montiert ist, daß er radial beweglich ist und auch so, daß zumindest seine Schreibspitze quer zur Radialrichtung bewegt werden kann.

4. Tachograph gemäß einem der vorhergehenden Ansprüche in Kombination mit einer Kartenleseeinrichtung, die eine Einrichtung zur Identifizierung eines Fahrers einschließt, dem eine eingesetzte Karte zugeordnet ist, und wobei eine Einrichtung zur Erzeugung von Markierungen auf der Diagrammscheibe vorgesehen ist, die den Fahrer anhand der von der Karte abgelesenen Information identifizieren.

5. Tachograph gemäß Anspruch 4, der ferner eine Einrichtung umfaßt, die auf Zustände anspricht, in denen keine Diagrammscheibe auf dem Drehteller vorhanden oder keine Karte in eine Leseeinrichtung eingesetzt worden ist, und die dann dem Fahrer anzeigt, daß solche Zustände vorliegen.

6. Tachograph gemäß Anspruch 5, der ferner eine Einrichtung zum Immobilisieren des Fahrzeugs umfaßt, bis eine Diagrammscheibe eingelegt und/oder eine annehmbare Karte eingesetzt ist.

7. Ein Tachograph gemäß Anspruch 5, der eine Einrichtung zum Erzeugen einer Anzeige außen an dem Fahrzeug umfaßt, die erkennen läßt, daß das Fahrzeug unbefugt gefahren wird.

## Revendications

1. Tachygraphe (1) comprenant un plateau tourne-disque (2) destiné à supporter un graphique (3), un stylet d'enregistrement (5) destiné à réaliser un tracé d'enregistrement sur le graphique, un moyen d'entraînement répondant à un premier signal de manière à amener le plateau tourne-disque et le stylet d'enregistrement à être déplacés de façon à réaliser ledit tracé d'enregistrement qui représente un état de fonctionnement d'un véhicule, le moyen d'entraînement étant également sensible à un second signal qui provoque un déplacement du plateau tourne-disque et du stylet d'enregistrement de façon que le tracé sur le graphique représente un repère d'identification,
caractérisé en ce que le plateau tourne-disque peut être entraîné en rotation soit dans le sens des aiguilles d'une montre, soit dans le sens inverse des aiguilles d'une montre de la quantité nécessaire suivant le rayon, afin de produire des marques ou des lignes horizontales (17) sur le graphique, et dans lequel le stylet d'enregistrement peut être déplacé suivant le rayon de manière à produire des marques ou des lignes verticales (19), les lignes horizontales et verticales étant des parties d'un code (18).

2. Tachygraphe selon la revendication 1, dans lequel les marques représentent un code à barres.

3. Tachygraphe selon la revendication 1, dans lequel le stylet d'enregistrement est monté de façon qu'il puisse être déplacé suivant le rayon et également de façon qu'au moins sa pointe d'écriture puisse être déplacée suivant une direction transversale à la direction radiale.

4. Tachygraphe selon l'une quelconque des revendications précédentes en combinaison avec un lecteur de carte, le lecteur comprenant un moyen destiné à identifier un conducteur associé à une carte insérée, un moyen étant prévu afin de réaliser des marques sur le graphique qui identifient le conducteur par rapport aux informations lues à partir de la carte.

5. Tachygraphe selon la revendication 4, comprenant en outre un moyen qui répond à des conditions dans lesquelles aucun graphique n'est présent sur le plateau tourne-disque, ou bien aucune carte n'a été insérée dans un lecteur, et qui fournit alors une indication, au conducteur, de ce que de telles conditions existent.

6. Tachygraphe selon la revendication 5, comprenant en outre un moyen destiné à immobiliser le véhicule jusqu'à ce qu'un graphique soit installé et/ou une carte acceptable ait été insérée.

7. Tachygraphe selon la revendication 5, comprenant en outre un moyen destiné à amener une indication, externe au véhicule, à être donnée de façon à indiquer que le véhicule est conduit sans autorisation appropriée.
